(19) Europäisches Patentamt / European Patent Office / Office européen des brevets

(11) **EP 2 149 775 B1**

(12) **EUROPEAN PATENT SPECIFICATION**

(45) Date of publication and mention
of the grant of the patent:
**02.10.2019 Bulletin 2019/40**

(51) Int Cl.:
*G01B 5/20* (2006.01)  *G01B 21/04* (2006.01)

(21) Application number: **09166787.3**

(22) Date of filing: **30.07.2009**

(54) **Profile measuring instrument and profile measuring method**

Profilmessinstrument und Profilmessverfahren

Instrument et procédé de mesure de profils

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **31.07.2008 JP 2008197715**

(43) Date of publication of application:
**03.02.2010 Bulletin 2010/05**

(73) Proprietor: **Mitutoyo Corporation**
**Kawasaki-shi, Kanagawa 213-8533 (JP)**

(72) Inventors:
• **Noda, Takashi**
**Utsunomiya-shi Tochigi 321-0923 (JP)**

• **Sakamoto, Shinjiro**
**Utsunomiya-shi Tochigi 321-0923 (JP)**
• **Ogura, Katsuyuki**
**Utsunomiya-shi Tochigi 321-0923 (JP)**
• **Kikuchi, Naoya**
**Utsunomiya-shi**
**Tochigi 321-0923 (JP)**

(74) Representative: **Grünecker Patent- und**
**Rechtsanwälte**
**PartG mbB**
**Leopoldstraße 4**
**80802 München (DE)**

(56) References cited:
WO-A2-02/090879    DE-A1- 19 815 098
JP-A- H05 196 411    US-B1- 6 460 261

EP 2 149 775 B1

**Description**

**BACKGROUND OF THE INVENTION**

**1. FIELD OF THE INVENTION**

The present invention relates to a profile measuring instrument and a profile measuring method for measuring a profile of a workpiece by rotating the workpiece.

**2. DESCRIPTION OF RELATED ART**

A typically known profile measuring instrument includes a probe for measuring a workpiece and a rotary table to which the workpiece is fixed and which rotates the workpiece relative to the probe so as to measure a profile of the workpiece by rotating the workpiece (for example, Document 1: JP-A-2001-264048).

A coordinate measuring machine (profile measuring instrument) as disclosed in Document 1 measures a profile of a workpiece using a plurality of Cartesian coordinate systems such as a workpiece coordinate system (object coordinate system) set for the workpiece and a table coordinate system set for a rotary table. The coordinate systems can be mutually transformed by translation or rotation.

Typically, in the table coordinate system, a center position of a reference ball is measured at three or more rotational positions for every predetermined rotating angle while a rotary table, on the upper surface of which the reference ball is fixed, is rotated, so that the table coordinate system is set to have its origin at a center of a circle determined by the measured center position. One axial direction in the table coordinate system is defined as a normal direction of the circle determined by the measured center position of the reference ball, and other two axial directions are orthogonal to the normal direction. The workpiece coordinate system is set by measuring a workpiece. For example, one axial direction in the workpiece coordinate system is defined as an axial direction of the workpiece, and other two axial directions are orthogonal to the axial direction of the workpiece.

However, when the workpiece is measured using the workpiece coordinate system and table coordinate system that are set as described above, measurement errors are caused by the runout of the rotary table, the squareness of the profile measuring instrument and the like because the coordinate systems are set at predetermined positions. Further, since the measurement errors are caused by the runout of the rotary table and the squareness of the profile measuring instrument, the measurement errors are increased as a measurement value is spaced apart from the origin of the table coordinate system (i.e., as a measurement position is spaced apart from the upper surface of the rotary table).

**SUMMARY OF THE INVENTION**

Profile measuring instruments for measuring a profile of a workpiece by rotating the workpiece including error correction function are disclosed in JP-H05-196411A, US 6460261B1, WO 02/090879 A2 and DE 19815098 A1.

An object of the invention is to provide a profile measuring instrument and a profile measuring method of properly correcting measurement errors caused by runout of a rotary table, squareness of the profile measuring instrument and the like to improve measurement accuracy.

According to an aspect of the invention, a profile measuring instrument for measuring a profile of a workpiece by rotating the workpiece is provided as set forth in claim 1.

When the reference gauge of the known diameter or radius is measured by the reference gauge measuring part, the measured diameter or radius of the reference gauge includes a measurement error caused by the runout of the rotary table and the squareness of the profile measuring instrument. Accordingly, the difference between the diameter or radius of the reference gauge measured by the reference gauge measuring part at a predetermined measuring point and the known diameter or radius of the reference gauge at the predetermined measuring point is coincident with the measurement error caused by the runout of the rotary table and the squareness of the profile measuring instrument.

The reference gauge may have any diameter or radius as long as it is given in advance. Since the profile measuring instrument outputs as a measurement value a position of the probe that is adjacent to or in contact with the surface of the workpiece, the measurement error caused by the runout of the rotary table and the squareness of the profile measuring instrument is constant even when the diameter or radius of the reference gauge is varied.

Since the profile measuring instrument includes the reference gauge measuring part and correction function generating part according to the aspect of the invention, the correction function can be generated in which the difference between the diameter or radius measured by the reference gauge measuring part and the known diameter or radius of the reference gauge is taken as the measurement error at the measuring point of the reference gauge measuring part.

Thus, by applying the correction function generated by the correction function generating part to the measurement value, the measurement error caused by the runout of the rotary table, the squareness of the profile measuring instrument and the like can be properly corrected, thereby improving measurement accuracy,

The correction function is generated as a function of the measurement error at the measuring point in the reference gauge coordinate system, and the measurement value is measured at the measuring point by the measuring part in the workpiece coordinate system.

Since the profile measuring instrument includes the first transformer and corrector according to the aspect of the invention, the measurement value measured by the measuring part in the workpiece coordinate system can be transformed into the reference gauge coordinate system by the first transformer and then the measurement value transformed into the reference gauge coordinate system can be corrected by the correction function. In other words, due to the coordinate transformation by the first transformer, the measuring point in the reference gauge coordinate system can be equivalent to the measuring point in the workpiece coordinate system and thus the correction function generated in the reference gauge coordinate system can be applied to the measurement value measured in the workpiece coordinate system.

Further, since the profile measuring instrument includes the second transformer that transforms the measurement value corrected by the corrector in the reference gauge coordinate system into the workpiece coordinate system, the measurement value corrected by the corrector can be output as the measurement value in the workpiece coordinate system.

According to another aspect of the invention, a profile measuring method is provided as set forth in claim 2.

According to the above-described profile measuring method, the same advantages can be attained as those of the above-described profile measuring instrument.

## BRIEF DESCRIPTION OF THE DRAWINGS

Fig. 1 is an overall diagram schematically showing a coordinate measuring machine according to an exemplary embodiment of the invention.

Fig. 2 is a block diagram showing an outline arrangement of the coordinate measuring machine according to the exemplary embodiment.

Fig. 3 shows a cylindrical square fixed to a rotary table according to the exemplary embodiment.

Fig. 4 shows a ball screw fixed to the rotary table according to the exemplary embodiment.

Fig. 5 shows relationships among a plurality of Cartesian coordinate systems used in a host computer according to the exemplary embodiment.

Fig. 6 is a flow chart showing a profile measuring process of the coordinate measuring machine according to the exemplary embodiment.

Fig. 7 shows a correction function generated by a correction function generating part according to the exemplary embodiment.

Fig. 8 shows a relationship between a measurement value transformed into a reference gauge coordinate system and a measurement value corrected by a correcting part according to the exemplary embodiment.

## DETAILED DESCRIPTION OF PREFERRED EMBODIMENT(S)

Exemplary embodiment(s) of the invention will be described below with reference to the attached drawings.

### Overall Arrangement of Coordinate Measuring Machine

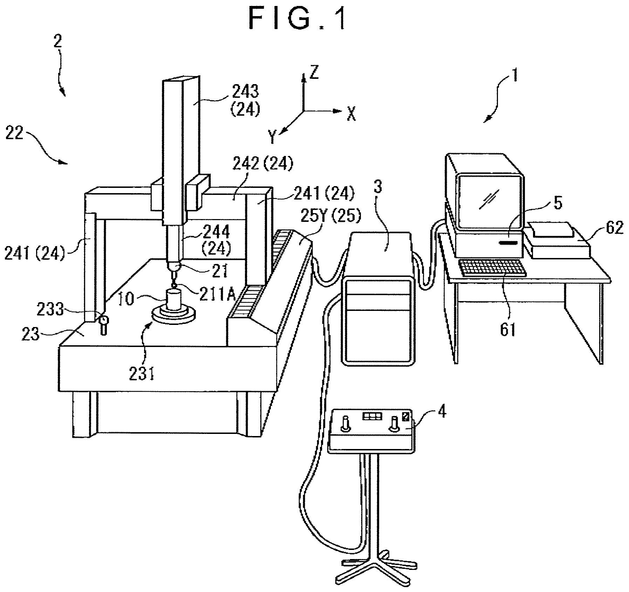

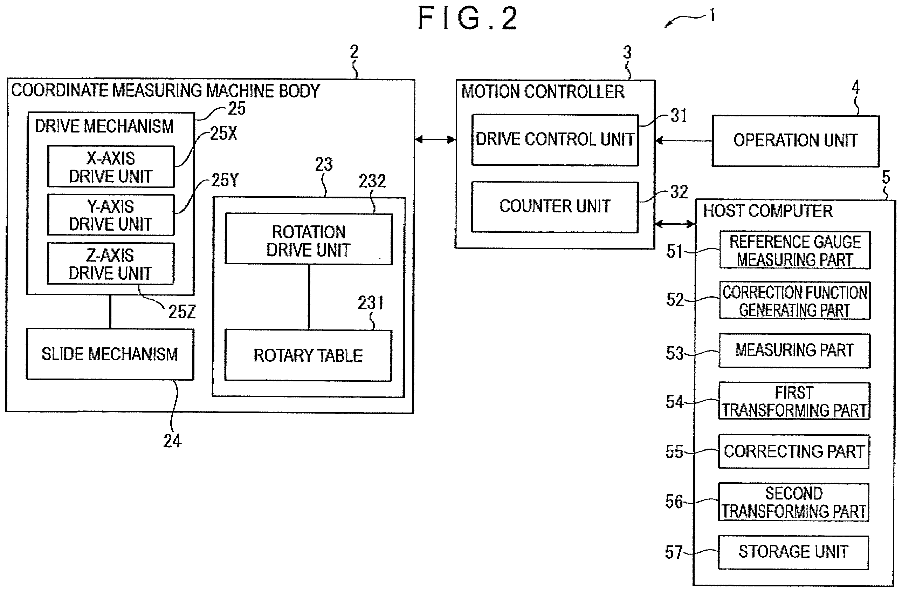

Fig. 1 is an overall diagram schematically showing a coordinate measuring machine 1 according to an exemplary embodiment of the invention. Fig. 2 is a block diagram showing an outline arrangement of the coordinate measuring machine 1. In Fig. 1, the upward direction is referred to as a +Z-axis direction, and two axes orthogonal to the Z-axis are referred to as an X-axis and a Y-axis. The same applies to the other attached drawings.

As shown in Fig. 1, the coordinate measuring machine 1 serving as a profile measuring instrument includes: a coordinate measuring machine body 2; a motion controller 3 for controlling the drive of the coordinate measuring machine body 2; an operation unit 4 for outputting a command to the motion controller 3 via an operation lever to manually manipulate the coordinate measuring machine body 2; a host computer 5 for outputting a predetermined command to the motion controller 3 and executing arithmetic processing such as profile analysis of a workpiece 10 disposed on the coordinate measuring machine body 2; and an input unit 61 and an output unit 62 that are connected to the host computer 5. The input unit 61 inputs to the host computer 5 measuring conditions and the like in the coordinate measuring machine 1. The output unit 62 outputs results of the measurement by the coordinate measuring machine 1.

The coordinate measuring machine body 2 includes a stylus 211A to be brought into contact with a surface of the workpiece 10 on a distal end (in the -Z-axis direction). The coordinate measuring machine body 2 further includes a probe 21 for measuring the workpiece 10, a movement mechanism 22 for holding a base end (in the +Z-axis direction) of the probe 21 and moving the probe 21, and a base 23 on which the movement mechanism 22 stands upright.

The movement mechanism 22 includes a slide mechanism 24 for holding the base end of the probe 21 and causing the probe 21 to slide, and a drive mechanism 25 for driving the slide mechanism 24 to move the probe 21.

The slide mechanism 24 includes: two beam support bodies 241 extending in the +Z-axis direction from both sides of the base 23 in the X-axis direction and slidable in the Y-axis direction; a beam 242 supported by the beam support bodies 241 and extending in the X-axis direction; a column 243 having a cylindrical shape extending in the Z-axis direction and slidable on the beam 242 in the X-axis direction; and a spindle 244 inserted to the inside of the column 243 and slidable within the column 243 in the Z-axis direction.

As shown in Figs. 1 and 2, the drive mechanism 25 includes: a Y-axis drive unit 25Y that supports one of the beam support bodies 241 located in +X-axis direction and slides the one of the beam support bodies 241 in the Y-axis direction; an X-axis drive unit 25X (not shown in Fig. 1) that slides the column 243 on the beam 242 in the X-axis direction; and a Z-axis drive unit 25Z (not shown in Fig. 1) that slides the spindle 244 within the column 243 in the Z-axis direction. Though not illustrated, the drive mechanism 25 includes sensors for detecting a displacement of the slide mechanism 24 in the respective axis directions. Each of the sensors outputs a pulse signal in accordance with the displacement of the slide mechanism 24.

As shown in Figs. 1 and 2, the base 23 includes: a rotary table 231 which is provided substantially in the center of the upper surface of the base 23 and to which the workpiece 10 is fixed; and a rotation drive unit 232 (not shown in Fig. 1) for rotating the rotary table 231 about the Z-axis on the upper surface of the base 23. Accordingly, the rotary table 231 rotates the workpiece 10 relative to the probe 21. Though not illustrated, the rotation drive unit 232 includes a sensor for detecting a rotational amount of the rotary table 231 and outputting a pulse signal in accordance with the rotational amount of the rotary table 231. As shown in Fig. 1, a reference ball 233 of which a radius is known is disposed on the base 23 for calibration of the coordinate measuring machine body 2. The reference ball 233 may be disposed on a plurality of positions on the base 23.

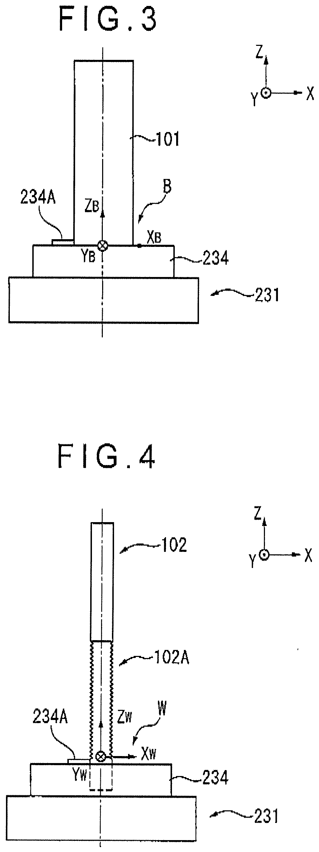

Fig. 3 shows a cylindrical square 101 fixed to the rotary table 231. Fig. 4 shows a ball screw 102 fixed to the rotary table 231.

As shown in Figs. 3 and 4, the rotary table 231 includes a disk-shaped chuck 234 attached to the upper surface thereof. The chuck 234 includes three jaws 234A disposed on the outer circumference at equal intervals. The jaws 234A press the workpiece 10 inwardly, so that the chuck 234 holds the workpiece 10 (the cylindrical square 101, the ball screw 102). Accordingly, the workpiece 10 is fixed to the rotary table 231.

As shown in Fig. 3, the cylindrical square 101 is held by the jaws 234A of the chuck 234 so that the central axis of the cylindrical square 101 is substantially coincident with the rotational axis of the rotary table 231 (the dashed-dotted line in Fig. 3) while the lower surface of the cylindrical square 101 contacts the upper surface of the chuck 234.

As shown in Fig. 4, the ball screw 102 is inserted into a hole (not shown) provided in the center of the chuck 234 and is held by the jaws 234A of the chuck 234 so that the central axis of the ball screw 102 is substantially coincident with the rotational axis of the rotary table 231 (the dashed-dotted line in Fig. 4).

As shown in Fig, 2, the motion controller 3 includes: a drive control unit 31 for controlling the drive mechanism 25 and rotation drive unit 232 in accordance with a command from the operation unit 4 or the host computer 5; and a counter unit 32 for counting pulse signals output from the sensors provided on the drive mechanism 25 and rotation drive unit 232.

The counter unit 32 measures a displacement of the slide mechanism 24 and a rotational amount of the rotary table 231 by counting the pulse signals output from the sensors. Then, the displacement of the slide mechanism 24 and the rotational amount of the rotary table 231 measured by the counter unit 32 are output to the host computer 5.

The host computer 5 is equipped with a CPU (Central Processing Unit). The host computer 5 controls the coordinate measuring machine body 2 by outputting a predetermined command to the motion controller 3 to rotate the workpiece 10 on the rotary table 231 in order to measure the profile of the workpiece 10. As shown in Fig. 2, the host computer 5 includes a reference gauge measuring part 51, a correction function generating part 52, a measuring part 53, a first transforming part 54, a correcting part 55, a second transforming part 56 and a storage unit 57.

As shown in Fig. 3, the reference gauge measuring part 51 measures diameters of the cylindrical square 101 in the axis direction in a reference gauge coordinate system B ($X_B$, $Y_B$, $Z_B$) set for the cylindrical square 101 while the cylindrical square 101 is fixed to the rotary table 231.

The diameters of the cylindrical square 101 serving as a reference gauge are measured in advance at a plurality of measuring points along the central axis by a coordinate measuring machine that is more accurate than the coordinate measuring machine 1 (hereinafter referred to as a standard machine). In other words, the diameters of the cylindrical square 101 are known. In this exemplary embodiment, the height of the cylindrical square 101 is 300 mm. The diameters of the cylindrical square 101 are measured in advance by the standard machine at measuring points that are spaced apart by 10 mm interval within a range of a start point that is 10 mm high from the lower surface of the cylindrical square 101 to an end point that is 290 mm high from the lower surface. When the standard machine is used, the measurement is done by moving a probe of the standard machine along the surface of the cylindrical square 101 without using the rotary table so as to avoid the influence of the runout of the rotary table.

In the reference gauge coordinate system B, an axis passing through centers of two circles provided by surface profiles of the cylindrical square 101 measured at two different height positions along the central axis of the cylindrical square 101 is set as a $Z_B$-axis. Two axes on the upper surface of the chuck 234, i.e., the lower surface of the cylindrical square 101, are set as an $X_B$-axis and a $Y_B$-axis. Note that the position of the upper surface of the chuck 234 is set by being measured by the coordinate measuring machine 1. Also, the $X_B$-axis and $Y_B$-axis are set to be orthogonal to the $Z_B$-axis.

The correction function generating part 52 generates a correction function based on: a difference between the diameter of the cylindrical square 101 measured by the reference gauge measuring part 51 and the known diameter, i.e., the diameter of the cylindrical square 101 measured by the standard machine; and the axial measuring point for measurement by the reference gauge measuring part 51.

As shown in Fig. 4, the measuring part 53 measures the ball screw 102 in a workpiece coordinate system W set for the ball screw 102 while the ball screw 102 is fixed to the rotary table 231.

In the workpiece coordinate system W, an axis passing through centers of two circles provided by surface profiles of the ball screw 102 measured at two different height positions along the central axis of the ball screw 102 is set as a Zw-axis, and two axes passing through the center of the lower circle (in -Z-axis direction) out of the two circles are set as an $X_W$-axis and a $Y_W$-axis respectively. Also, the $X_W$-axis and $Y_W$-axis are set to be orthogonal to the $Z_W$-axis.

The first transforming part 54 transforms a measurement value measured by the measuring part 53 in the workpiece coordinate system W into the reference gauge coordinate system B.

Note that the host computer 5 measures the profile of the workpiece using a plurality of Cartesian coordinate systems.

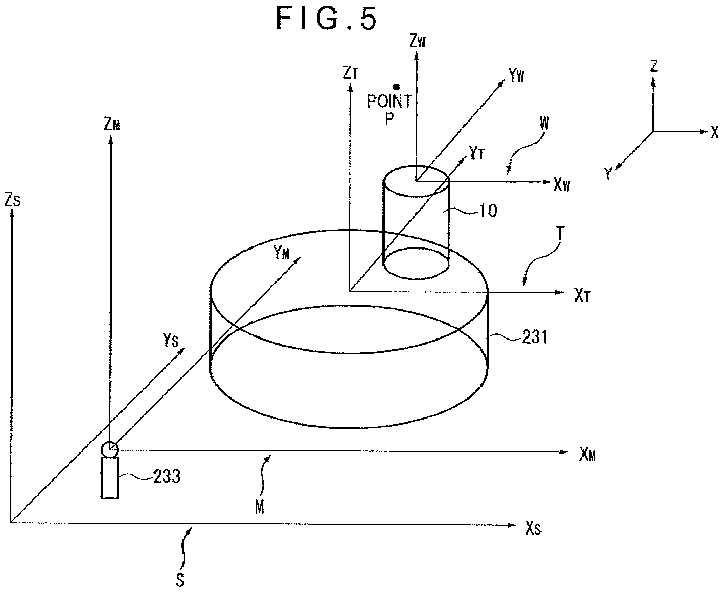

Fig. 5 shows relationships among the plurality of Cartesian coordinate systems used in the host computer 5. In Fig. 5, the workpiece 10 is deviated from the center of the rotary table 231 to simplify the drawing.

As shown in Fig. 5, the host computer 5 measures the profile of the workpiece 10 using a plurality of coordinate systems including: a scale coordinate system S ($X_S$, $Y_S$, $Z_S$) set for the slide mechanism 24; a machine coordinate system M ($X_M$, $Y_M$, $Z_M$) set to have its origin at the center of the reference ball 233; a table coordinate system T ($X_T$, $Y_T$, $Z_T$) set for the rotary table 231; and a rotation coordinate system Tθ (not shown) provided when the table coordinate system T is rotated by a rotating angle θ, in addition to the above-described reference gauge coordinate system B and workpiece coordinate system W. For example, the coordinate measuring machine body 2 is controlled using the scale coordinate system S.

The scale coordinate system S is set in advance as an absolute coordinate system for the coordinate measuring machine 1, and the machine coordinate system M is set by measuring a center position of the reference ball 233.

In the table coordinate system T, a center position of a reference ball (not shown) having the same arrangement as the reference ball 233 is measured at three or more rotational positions for every predetermined rotating angle while the rotary table 231, on the upper surface of which the reference ball is fixed, is rotated. Then, the table coordinate system T is set to have its origin at a center of a circle determined by the measured center position. One axis ($Z_T$-axis) direction in the table coordinate system T is defined as a normal direction of the circle determined by the measured center position of the reference ball, and other two axes ($X_T$-axis and $Y_T$-axis) directions are orthogonal to the normal direction.

The reference gauge coordinate system B and workpiece coordinate system W are rotated with the rotation of the rotary table 231, i.e., the rotation of the rotation coordinate system Tθ.

The coordinate systems can be mutually transformed by translation or rotation. For example, a point P measured in the workpiece coordinate system W (see Fig. 5) can be transformed into the rotation coordinate system Tθ by translation of the coordinate system W using a translation matrix. The point P transformed into the rotation coordinate system Tθ can be further transformed into the table coordinate system T by rotation of the coordinate system Tθ using a rotation matrix.

In this exemplary embodiment, the first transforming part 54 transforms the measurement value measured in the workpiece coordinate system W into the scale coordinate system S through the rotation coordinate system Tθ, table coordinate system T and machine coordinate system M, and then into the reference gauge coordinate system B through the machine coordinate system M, table coordinate system T and rotation coordinate system Tθ.

The correcting part 55 corrects the measurement value transformed into the reference gauge coordinate system B by the first transforming part 54 using a correction function generated by the correction function generating part 52,

The second transforming part 56 transforms the measurement value corrected by the correcting part 55 in the reference gauge coordinate system B into the workpiece coordinate system W. In this exemplary embodiment, the second transforming part 56 transforms the measurement value corrected in the reference gauge coordinate system B into the scale coordinate system S through the machine coordinate system M, table coordinate system T and rotation coordinate system Tθ, and then into the workpiece coordinate system W through the rotation coordinate system Tθ, table coordinate system T and machine coordinate system M.

The storage unit 57 stores the measurement values measured by the reference gauge measuring part 51 and measuring part 53 and the correction function generated by the correction function generating part 52. The storage unit 57 also stores a program for executing a profile measuring process as described below.

**Profile Measuring Process of Coordinate Measuring Machine**

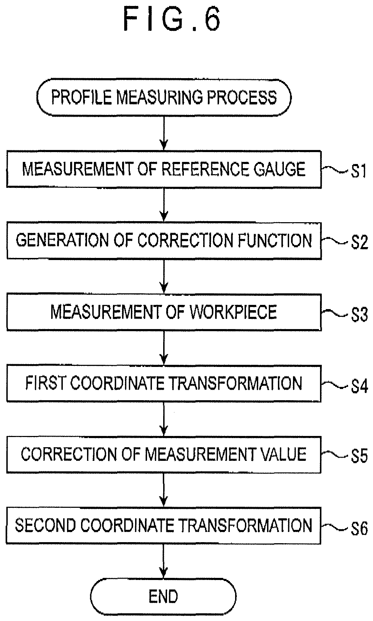

Fig. 6 is a flow chart showing a profile measuring process of the coordinate measuring machine 1.

As shown in Fig. 6, the host computer 5 executes steps S1 to S6 as described below when the profile measuring process is executed.

As shown in Fig. 3, the reference gauge measuring part 51 measures diameters of the cylindrical square 101 along the axis direction in the reference gauge coordinate system B $(X_B, Y_B, Z_B)$ set for cylindrical square 101 while the cylindrical square 101 is fixed to the rotary table 231 (reference gauge measurement step S1).

In the exemplary embodiment, a measuring range of the reference gauge measuring part 51 is set in accordance with a measuring range of the ball screw 102. Specifically, in order to measure a profile of a screw part 102A of the ball screw 102 (see Fig. 4), the reference gauge measuring part 51 measures the diameters of the cylindrical square 101 at measuring points spaced apart by 40 mm interval within a range of a start point that is 20 mm high from the upper surface of the chuck to an end point that is 220 mm high from the upper surface, i.e., within a range of the screw part 102A. Incidentally, the measuring range and the interval between the measuring points of the reference gauge measuring part 51 are settable in accordance with a measuring range of a workpiece to be measured and smoothness of a surface profile thereof.

After the diameters of the cylindrical square 101 are measured in the reference gauge measurement step S1, the correction function generating part 52 generates a correction function based on: a difference between the diameter of the cylindrical square 101 measured by the reference gauge measuring part 51 and the known diameter; and the axial measuring point for measurement by the reference gauge measuring part 51 (correction function generation step S2).

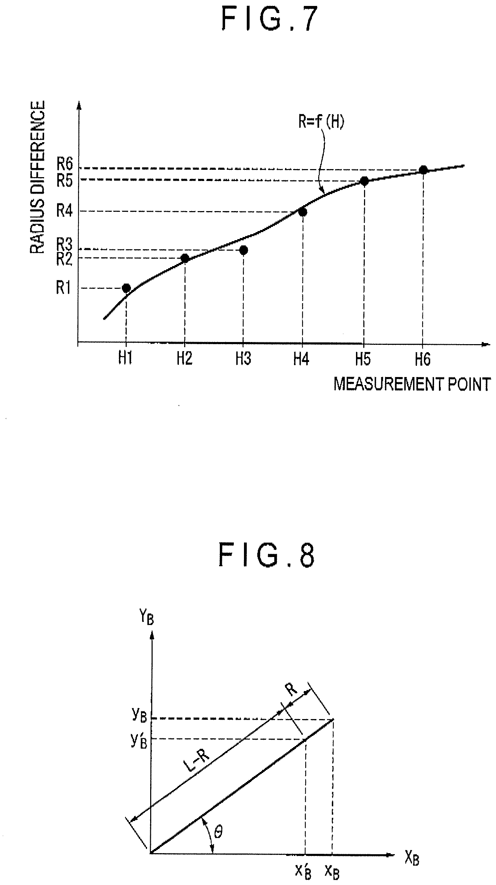

Fig. 7 shows the correction function generated by the correction function generating part 52. In Fig. 7, the horizontal axis represents an axial measuring point H (H1 to H6) when the measurement is done by the reference gauge measuring part 51, and the vertical axis represents a radius difference R (R1 to R6) calculated based on the difference between the diameter of the cylindrical square 101 measured by the reference gauge measuring part 51 and the known diameter.

As shown in Fig. 7, the correction function generating part 52 generates the correction function based on the radius difference R and the measuring point H. Specifically, the correction function generating part 52 generates a correction function $R=f(H)$ by polynomial approximation by applying a least-square method to the measuring point H and the radius R. The correction function f generated by the correction function generating part 52 is stored in the storage unit 57. Incidentally, the correction function may be generated by other approximation such as spline approximation instead of the above-described polynomial approximation.

After the correction function is generated in the correction function generation step S2, the measuring part 53 measures the ball screw 102 in the workpiece coordinate system W set for the ball screw 102 while the ball screw 102 is fixed to the rotary table 231 as shown in Fig. 4 (measurement step S3). In order to measure the ball screw 102, a measurement value $(x_w, y_w, z_w)$ is obtained at a plurality of measuring points (positions of the stylus 211A) by sampling a displacement of the slide mechanism 24 and a rotational amount of the rotary table 231 measured by the counter unit 32 at a predetermined sampling interval while the stylus 211A contacts a screw groove of the ball screw 102 and the rotary table 231 is rotated. Then, the measurement value measured by the measuring part 53 is stored in the storage unit 57.

After the profile of the ball screw 102 is measured in the measurement step S3, the first transforming part 54 transforms the measurement value measured by the measuring part 53 in the workpiece coordinate system W into the reference gauge coordinate system B (first transformation step S4).

After the measurement value is transformed into the reference gauge coordinate system B in the first transformation step S4, the measurement value $(x_B, y_B, z_B)$ transformed into the reference gauge coordinate system B by the first transforming part 54 is corrected with the correction function f generated by the correction function generating part 52 (correction step S5).

Fig. 8 shows a relationship between the measurement value transformed into the reference gauge coordinate system B and the measurement value corrected by the correcting part 55. In Fig. 8, the measurement value prior to the correction is expressed as $(x_B, y_B)$ and the measurement value after the correction is expressed as $(x_B', y_B')$.

As shown in Fig. 8, the correcting part 55 corrects the measurement value transformed into the reference gauge coordinate system B based on the following formulae (1) to (4).

Initially, $z_B$ indicating the measuring point H of the measurement value is assigned to the correction function f to calculate a radius difference R based on the formula (1).

$$R = f(z_B) \qquad \cdots (1)$$

Then, based on the formula (2), a distance L from the origin to the measurement value on the XY plane in the reference gauge coordinate system B is calculated.

$$L = \sqrt{(x_B^2 + y_B^2)} \qquad \cdots (2)$$

Based on the formulae (3) and (4), the corrected measurement value $(x_B', y_B')$ is calculated. Here, $\theta$ indicates an angle between the $X_B$-axis and the measurement value in the reference gauge coordinate system B.

$$x_B' = (L - R)\cos\theta \qquad \cdots (3)$$

$$y_B' = (L - R)\sin\theta \qquad \cdots (4)$$

After the measurement value is corrected in the correction step S5, the second transforming part 56 transforms the measurement value $(x_B', y_B', z_B)$ corrected by the correcting part 55 in the reference gauge coordinate system B into the workpiece coordinate system W (second transformation step S6).

By executing the steps S1 to S6, the coordinate measuring machine 1 corrects measurement errors caused by the runout of the rotary table 231, the squareness of the coordinate measuring machine 1 and the like. Then, the diameter of the ball screw 102 is calculated based on the corrected measurement value.

According to the exemplary embodiment, the following advantages can be attained.

(1) Since the coordinate measuring machine 1 includes the reference gauge measuring part 51 and correction function generating part 52, measurement errors caused by the runout of the rotary table 231, the squareness of the coordinate measuring machine 1 and the like can be appropriately corrected by applying the correction function f generated by the correction function generating part 52 to the measurement value $(x_w, y_w, z_w)$, thereby improving measurement accuracy.

(2) Since the coordinate measuring machine 1 includes the first transforming part 54 and correcting part 55, the measuring point in the reference gauge coordinate system B can be equivalent to the measuring point in the workpiece coordinate system W and thus the correction function f generated in the reference gauge coordinate system B can be applied to the measurement value $(x_w, y_w, z_w)$ measured in the workpiece coordinate system W.

(3) Since the coordinate measuring machine 1 includes the second transforming part 56, the measurement value $(x_B', y_B', z_B)$ corrected by the correcting part 55 can be output as the measurement value in the workpiece coordinate system W.

**Modification of Exemplary Embodiment(s)**

The invention is not limited to the above-described exemplary embodiment, but includes any modifications, improvements and the like as long as they fall within the scope of the appended claims.

For example, in the exemplary embodiment, the reference gauge measuring part 51 measures the diameter of the cylindrical square 101, and the correction function generating part 52 generates the correction function based on the radius difference R calculated based on the difference between the diameter of the cylindrical square 101 measured by the reference gauge measuring part 51 and the known diameter and the axial measuring point H for measurement by the reference gauge measuring part 51. However, the reference gauge measuring part may measure a radius of a reference gauge, and the correction function generating part may generate a steric correction function based on a difference between the radius of the reference gauge measured by the reference gauge measuring part and a known radius, an axial measuring point for measurement by the reference gauge measuring part, and a rotating angle of a rotary table. In other words, it is only required that the reference gauge measuring part measure a diameter or radius of a reference gauge along an axial direction in a reference gauge coordinate system set for the reference gauge and the correction function generating part generate a correction function based on a difference between the diameter or radius measured by the reference gauge measuring part and a known diameter or radius and a measuring point of the reference gauge measuring part.

Though the cylindrical square 101 is used as the reference gauge in the exemplary embodiment, other component may be used as the reference gauge as long as it has a columnar shape or cylindrical shape and has a known diameter or radius.

In the exemplary embodiment, the first transforming part 54 and second transforming part 56 transforms the reference gauge coordinate system B and workpiece coordinate system W through the rotation coordinate system Tθ, table coordinate system T and machine coordinate system M. However, a transformation matrix for directly transforming the reference gauge coordinate system B and workpiece coordinate system W may be generated and coordinate transformation may be performed by the generated transformation matrix.

Though the profile measuring instrument is exemplified by the coordinate measuring machine 1 in the exemplary embodiment, the invention is applicable to other measuring instrument as long as it is a profile measuring instrument including a probe and a rotary table for measuring a profile of a workpiece by rotating the workpiece.

**Claims**

1. A profile measuring instrument for measuring a profile of a workpiece by rotating the workpiece, the profile measuring instrument comprising:

   a probe (21) that measures the workpiece;
   a movement mechanism (22) that holds and moves the probe (21);
   a rotary table (231) to which the workpiece is fixed and which rotates the workpiece relative to the probe (21);
   a counter unit (32) that measures a displacement of the movement mechanism (22);
   a reference gauge measuring part (51) that measures a diameter or radius of a reference gauge (101) based on the displacement measured by the counter unit (32) along an axial direction in a reference gauge coordinate system set for the reference gauge (101) while the reference gauge (101) is fixed to the rotary table (231), the reference gauge (101) having a columnar shape or cylindrical shape and having a known diameter or radius;
   a correction function generating part (52) that generates a correction function based on a difference between the diameter or radius measured by the reference gauge measuring part (51) and the known diameter or radius, when the diameter or radius of the reference gauge (101) is measured by the reference gauge measuring part (51) at a measuring point on a central axis of the reference gauge (101);
   a measuring part (53) that measures the workpiece in a workpiece coordinate system set for the workpiece while the workpiece is fixed to the rotary table (231) based on the displacement measured by the counter unit (32);
   a first transformer (54) that transforms a measurement value measured by the measuring part (53) in the workpiece coordinate system into the reference gauge coordinate system;
   a corrector (55) that corrects by the correction function the measurement value transformed into the reference gauge coordinate system by the first transformer (54); and
   a second transformer (56) that transforms the measurement value corrected by the corrector (55) in the reference gauge coordinate system into the workpiece coordinate system.

2. A profile measuring method used in a profile measuring instrument for measuring a profile of a workpiece by rotating the workpiece, the profile measuring instrument including: a probe (21) that measures the workpiece; a movement mechanism (22) that holds and moves the probe (21); a rotary table (231) to which the workpiece is fixed and which rotates the workpiece relative to the probe (21); and a counter unit (32) that measures a displacement of the movement mechanism (22), the profile measuring method comprising:

   measuring a displacement of the movement mechanism (22);
   measuring a diameter or radius of a reference gauge (101) based on the displacement of the movement mechanism (22) along an axial direction in a reference gauge coordinate system set for the reference gauge (101) while the reference gauge (101) is fixed to the rotary table (231), the reference gauge (101) having a columnar shape or cylindrical shape and having a known diameter or radius;
   generating a correction function based on a difference between the diameter or radius measured in the measuring of the reference gauge and the known diameter or radius, when the diameter or radius of the reference gauge (101) is measured at a measuring point on a central axis of the reference gauge (101);
   measuring the workpiece in a workpiece coordinate system set for the workpiece while the workpiece is fixed to the rotary table (231) based on the displacement measured by the counter unit (32);
   first transforming a measurement value measured in the workpiece coordinate system in the measuring of the workpiece into the reference gauge coordinate system;

correcting by the correction function the measurement value transformed into the reference gauge coordinate system in the first transforming; and

second transforming the measurement value corrected in the reference gauge coordinate system in the correcting into the workpiece coordinate system.

**Patentansprüche**

1. Profil-Messinstrument, mit dem ein Profil eines Werkstücks durch Drehen des Werkstücks gemessen wird, wobei das Profil-Messinstrument umfasst:

eine Sonde (21), die das Werkstück misst;

einen Bewegungsmechanismus (22), der die Sonde (21) hält und bewegt;

einen Drehtisch (231), an dem das Werkstück befestigt ist und der das Werkstück relativ zu der Sonde (21) dreht;

eine Zähler-Einheit (32), die eine Verschiebung des Bewegungsmechanismus (22) misst;

einen Teil (51) zum Messen einer Vergleichslehre, der einen Durchmesser oder Radius einer Vergleichslehre (101) auf Basis der durch die Zähler-Einheit (32) gemessenen Verschiebung in einer axialen Richtung in einem für die Vergleichslehre (101) festgelegten Vergleichslehren-Koordinatensystem misst, während die Vergleichslehre (101) an dem Drehtisch (231) befestigt ist, wobei die Vergleichslehre (101) eine Säulenform oder zylindrische Form aufweist und einen bekannten Durchmesser oder Radius hat;

einen Teil (52) zum Erzeugen einer Korrekturfunktion, der eine Korrekturfunktion auf Basis einer Differenz zwischen dem durch den Teil (51) zum Messen einer Vergleichslehre gemessenen Durchmesser oder Radius und dem bekannten Durchmesser oder Radius erzeugt, wenn der Durchmesser oder Radius der Vergleichslehre (101) durch den Teil (51) zum Messen einer Vergleichslehre an einem Messpunkt auf einer Mittelachse der Vergleichslehre (101) gemessen wird;

einen Messteil (53), der das Werkstück in einem für das Werkstück festgelegten Werkstück-Koordinatensystem auf Basis der durch die Zähler-Einheit (32) gemessenen Verschiebung misst, während das Werkstück an dem Drehtisch (231) befestigt ist;

eine erste Umwandlungseinrichtung (54), die einen durch den Messteil (53) in dem Werkstück-Koordinatensystem gemessenen Messwert in das Vergleichslehren-Koordinatensystem umwandelt;

eine Korrektureinrichtung (55), die den durch die erste Umwandlungseinrichtung (54) in das Vergleichslehren-Koordinatensystem umgewandelten Messwert mittels der Korrekturfunktion korrigiert; sowie

eine zweite Umwandlungseinrichtung (56), die den durch die Korrektureinrichtung (55) korrigierten Messwert in dem Vergleichslehren-Koordinatensystem in das Werkstück-Koordinatensystem umwandelt.

2. Profil-Messverfahren, das in einem Profil-Messinstrument verwendet wird, mit dem ein Profil eines Werkstücks durch Drehen des Werkstücks gemessen wird, wobei das Profil-Messinstrument eine Sonde (21), die das Werkstück misst, einen Bewegungsmechanismus (22), der die Sonde (21) hält und bewegt, einen Drehtisch (231), an dem das Werkstück befestigt ist und der das Werkstück relativ zu der Sonde (21) dreht, sowie eine Zähler-Einheit (32) enthält, die eine Verschiebung des Bewegungsmechanismus (22) misst, und wobei das Profil-Messverfahren umfasst:

Messen einer Verschiebung des Bewegungsmechanismus (22);

Messen eines Durchmessers oder Radius einer Vergleichslehre (101) auf Basis der Verschiebung des Bewegungsmechanismus (22) in einer axialen Richtung in einem für die Vergleichslehre (101) festgelegten Vergleichslehren-Koordinatensystem, während die Vergleichslehre (101) an dem Drehtisch (231) befestigt ist, wobei die Vergleichslehre (101) eine Säulenform oder zylindrische Form aufweist und einen bekannten Durchmesser oder Radius hat;

Erzeugen einer Korrekturfunktion auf Basis einer Differenz zwischen dem beim Messen der Vergleichslehre gemessenen Durchmesser oder Radius und dem bekannten Durchmesser oder Radius, wenn der Durchmesser oder Radius der Vergleichslehre (101) an einem Messpunkt auf einer Mittelachse der Vergleichslehre (101) gemessen wird;

Messen des Werkstücks in einem für das Werkstück festgelegten Werkstück-Koordinatensystem, während das Werkstück an dem Drehtisch (231) befestigt ist, auf Basis der durch die Zähler-Einheit (32) gemessenen Verschiebung;

erstes Umwandeln eines bei dem Messen des Werkstücks im Werkstück-Koordinatensystem gemessenen Messwertes in das Vergleichslehren-Koordinatensystem;

Korrigieren des bei dem ersten Umwandeln in das Vergleichslehren-Koordinatensystem umgewandelten Messwertes mittels der Korrekturfunktion; und

zweites Umwandeln des bei dem Korrigieren korrigierten Messwertes in dem Vergleichslehren-Koordinatensystem in das Werkstück-Koordinatensystem.

**Revendications**

1. Instrument de mesure de profil pour mesurer un profil d'une pièce de travail en faisant tourner la pièce de travail, l'instrument de mesure de profil comprenant :

   une sonde (21) qui mesure la pièce de travail ;

   un mécanisme de déplacement (22) qui maintient et déplace la sonde (21) ;

   une table rotative (231) à laquelle la pièce de travail est fixée et qui fait tourner la pièce de travail par rapport à la sonde (21) ;

   une unité compteur (32) qui mesure un déplacement du mécanisme de déplacement (22) ;

   une partie de mesure de calibre de référence (51) qui mesure un diamètre ou un rayon d'un calibre de référence (101) sur base du déplacement mesuré par l'unité compteur (32) en direction axiale dans un système de coordonnées de calibre de référence établi pour le calibre de référence (101) alors que le calibre de référence (101) est fixé sur la table rotative (231), le calibre de référence (101) présentant une forme de colonne ou de cylindre et un diamètre ou un rayon connu ;

   une partie de génération de fonction de correction (52) qui génère une fonction de correction sur base de la différence entre le diamètre ou rayon mesuré par la partie de mesure du calibre de référence (51) et le diamètre ou rayon connu, quand le diamètre ou rayon du calibre de référence (101) est mesuré par la partie de mesure du calibre de référence (51) à un point de mesure sur l'axe central du calibre de référence (101) ;

   une partie de mesure (53) qui mesure la pièce de travail dans un système de coordonnées de pièce de travail établi pour la pièce de travail alors que la pièce de travail est fixée sur la table rotative (231) sur base du déplacement mesuré par l'unité compteur (32) ;

   un premier transformateur (54) qui transforme une valeur de mesure mesurée par la partie de mesure (53) dans le système de coordonnées de la pièce de travail vers le système de coordonnées du calibre de référence ;

   un correcteur (55) qui corrige, à l'aide de la fonction de correction, la valeur de mesure transformée vers le système de coordonnées du calibre de référence par le premier transformateur (54) ; et

   un deuxième transformateur (56) qui transforme la valeur de mesure corrigée par le correcteur (55) dans le système de coordonnées du calibre de référence vers le système de coordonnées de la pièce de travail.

2. Procédé de mesure de profil utilisé avec un instrument de mesure de profil pour mesurer un profil d'une pièce de travail en faisant tourner la pièce de travail, l'instrument de mesure de profil comprenant : une sonde (21) qui mesure la pièce de travail ; un mécanisme de déplacement (22) qui maintient et déplace la sonde (21) ; une table rotative (231) à laquelle la pièce de travail est fixée et qui fait tourner la pièce de travail par rapport à la sonde (21) ; et une unité compteur (32) qui mesure un déplacement du mécanisme de déplacement (22), le procédé de mesure de profil comprenant :

   la mesure d'un déplacement du mécanisme de déplacement (22) ;

   la mesure d'un diamètre ou d'un rayon d'un calibre de référence (101) sur base du déplacement du mécanisme de déplacement (22) en direction axiale d'un système de coordonnées du calibre de référence établi pour le calibre de référence (101) alors que le calibre de référence (101) est fixé sur la table rotative (231), le calibre de référence (101) présentant une forme de colonne ou de cylindre et un diamètre ou un rayon connu ;

   la génération d'une fonction de correction sur base de la différence entre le diamètre ou rayon mesuré lors de la mesure du calibre de référence et le diamètre ou rayon connu, quand le diamètre ou rayon du calibre de référence (101) est mesuré à un point de mesure sur l'axe central du calibre de référence (101) ;

   la mesure de la pièce de travail dans un système de coordonnées de pièce de travail établi pour la pièce de travail alors que la pièce de travail est fixée sur la table rotative (231) sur base du déplacement mesuré par l'unité compteur (32) ;

   une première transformation d'une valeur de mesure mesurée dans le système de coordonnées de la pièce de travail lors de la mesure de la pièce de travail vers le système de coordonnées du calibre de référence ;

   une correction, à l'aide de la fonction de correction, de la valeur de mesure transformée vers le système de coordonnées du calibre de référence lors de la première transformation ; et

   une deuxième transformation de la valeur de mesure corrigée dans le système de coordonnées du calibre de référence lors de la correction vers le système de coordonnées de la pièce de travail.

# FIG. 1

# FIG.2

COORDINATE MEASURING MACHINE BODY ⟋2

DRIVE MECHANISM ⟋25
25X
X-AXIS DRIVE UNIT
25Y
Y-AXIS DRIVE UNIT
Z-AXIS DRIVE UNIT
25Z

23    232
ROTATION DRIVE UNIT
231
ROTARY TABLE

SLIDE MECHANISM

24

MOTION CONTROLLER ⟋3
DRIVE CONTROL UNIT — 31
COUNTER UNIT — 32

OPERATION UNIT — 4

HOST COMPUTER — 5
51 — REFERENCE GAUGE MEASURING PART
52 — CORRECTION FUNCTION GENERATING PART
53 — MEASURING PART
54 — FIRST TRANSFORMING PART
55 — CORRECTING PART
56 — SECOND TRANSFORMING PART
57 — STORAGE UNIT

1

EP 2 149 775 B1

# FIG.3

# FIG.4

FIG.5

# F I G . 6

```
┌─────────────────────────────────┐
│   PROFILE MEASURING PROCESS      │
└─────────────────────────────────┘
                 │
                 ▼
┌─────────────────────────────────┐
│  MEASUREMENT OF REFERENCE GAUGE  │───S1
└─────────────────────────────────┘
                 │
                 ▼
┌─────────────────────────────────┐
│  GENERATION OF CORRECTION FUNCTION │───S2
└─────────────────────────────────┘
                 │
                 ▼
┌─────────────────────────────────┐
│     MEASUREMENT OF WORKPIECE     │───S3
└─────────────────────────────────┘
                 │
                 ▼
┌─────────────────────────────────┐
│   FIRST COORDINATE TRANSFORMATION │───S4
└─────────────────────────────────┘
                 │
                 ▼
┌─────────────────────────────────┐
│  CORRECTION OF MEASUREMENT VALUE │───S5
└─────────────────────────────────┘
                 │
                 ▼
┌─────────────────────────────────┐
│  SECOND COORDINATE TRANSFORMATION │───S6
└─────────────────────────────────┘
                 │
                 ▼
┌─────────────────────────────────┐
│              END                 │
└─────────────────────────────────┘
```

# FIG.7

# FIG.8

**EP 2 149 775 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001264048 A
- JP H05196411 A
- US 6460261 B1
- WO 02090879 A2
- DE 19815098 A1